# EUROPEAN PATENT SPECIFICATION

(11) **EP 1 676 182 B1**
(45) Date of publication and mention of the grant of the patent: **23.04.2008**
(21) Application number: 04770420.0
(22) Date of filing: 22.10.2004
(51) Int. Cl.: G06F 1/00, G08B 13/12

(54) **CIRCUIT SECURITY**
SCHALTUNGS-SICHERHEIT
SECURITE DE CIRCUIT

(30) Priority: 24.10.2003 IE 20030801
(43) Date of publication of application: 05.07.2006
(73) Proprietor: VeriFone Systems Ireland Limited, Dublin 18 (IE)
(72) Inventor: COLEMAN, Ronan, Naas, County Kildare (IE); MARTIN, Michael, Leopardstown, Dublin 19 (IE)
(74) Representative: Weldon, Michael James
(86) International application number: PCT/IE2004/000146
(87) International publication number: WO 2005/041002

(56) References cited:
- EP-A- 0 495 645
- EP-A- 1 126 358
- DE-A- 19 705 518
- STEVE H. WEINGART: "Physical Security Devices for Computer Subsystems: A survey of Attacks and Defenses" SPRINGER-VERLAG, [Online] 2000, pages 302-317, XP002312260 BERLIN Retrieved from the Internet: URL:http://www.springerlink.com/media/5HYY YJMVUG0U1CQHLK1P/Contributions/L/N/U/Y/LNU YD6HB3TAWHT75.pdf> [retrieved on 2004-12-30]

## Description

### Field of the Invention

The invention relates to security of electronic circuits such as circuits for processing and storing security codes for transactions.

### Prior Art Discussion

It is known from US6355316 to provide a secure device comprising an electronic circuit covered by a cover with a security track. If this track is broken an alarm is raised in the secure electronic circuit. The cover is of brittle material so that even the smallest damage causes it to break into a large number of small elements.

DE199705518 describes a secure circuit and a cover over the circuit.

The invention is directed towards providing an improved secure circuit in which:
there is improved circuit security against tampering; and/or
the secure circuit has improved ability to withstand mechanical shock; and/or
the secure circuit can be non-destructively accessed by an authorised engineer for repair or upgrade.

### Statements of Invention

According to the invention, there is provided a secure circuit device as set out in claim 1.

In one embodiment, the cover comprises a security track with a dense pattern on an inner surface, facing the board.

In another embodiment, said security track has a serpentine pattern of a single continuous track.

In a further embodiment, the board has a multilayer structure and it comprises a security track having a dense pattern in an internal layer.

In one embodiment, said pattern is a serpentine pattern of a continuous single track.

In another embodiment, the secure circuit is electrically connected to said security track by blind vias in the board.

In a further embodiment, the board comprises through vias linking components on an exposed board surface with the secure circuit.

In one embodiment, said components include a keypad.

In another embodiment, the board comprises blind vias linking parts of the secure circuit.

In a further embodiment, both the cover and the board comprise inter-connecting ground rails.

In one embodiment, said ground rails extend around a periphery of the board area covered by the cover.

In another embodiment, the pad comprises a deformable material with embedded conductors.

In a further embodiment, the conductors comprise threads of metal extending between the surfaces of the pad.

In one embodiment, the keypad comprises a security key linked with a security track.

In another embodiment, said security key comprises a ground guard rail surrounding the key.

In a further embodiment, said security track comprises a track in a serpentine pattern on a surface of the board covered by, and facing towards, the cover.

In one embodiment, said track connects with the security track of the cover.

In another embodiment, said security track is also connected to a security track of an internal layer of the board.

### DETAILED DESCRIPTION OF THE INVENTION

### Brief Description of the Drawings

The invention will be more clearly understood from the following description of some embodiments thereof, given by way of example only with reference to the accompanying drawings in which:-
Figs. 1(a), 1(b), and 1(c) are plan, and diagrammatic cross-sectional side and front views respectively of a security device containing a secure circuit;
Fig. 2 is a diagrammatic cross-sectional diagram showing how a cover is secured in place on a circuit board of the device;
Fig. 3 is a plan view of the board;
Fig. 4 is an underneath plan showing a keypad which includes a case switch key surrounded by a copper guard rail which is connected to ground potential;
Fig. 5 is a diagrammatic cross-sectional diagram of the main board;
Fig. 6 is a view of security tracks embedded in an internal layer of the board; and
Fig. 7 is a view of a security track and a ground rail on the internal surface of the cover.

### Description of the Embodiments

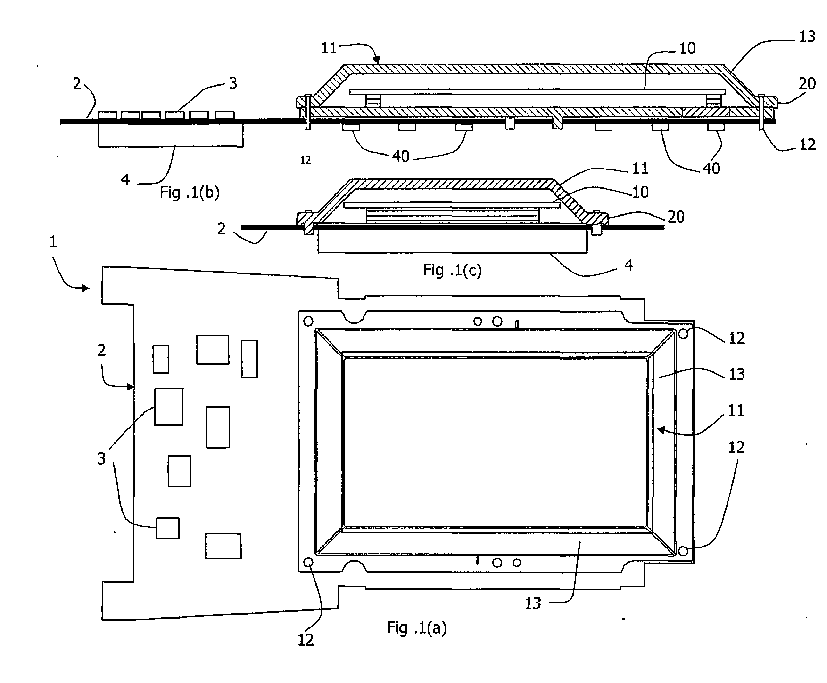

Referring to Figs. 1(a), 1(b), and 1(c) a secure device 1 comprises a main circuit board 2 having non-secure components 3 and an LCD 4 on opposed sides of the main board 2 at an exposed end. The device 1 also comprises a secure circuit 10 mounted within an enclosure formed between the main board 2 and a security cover 11. The cover 11 is secured to the main board 2 by bolt fasteners 12. The security cover 11 has splayed-out side walls 13 terminating in a rim 20 contacting the main board 2. The secure circuit 10 is an ARM microprocessor and alarm components, and it is mounted on connectors on the main board 2. The device 1 also comprises keypad keys 40 on the exposed surface of the board 2 opposed to the cover 11.

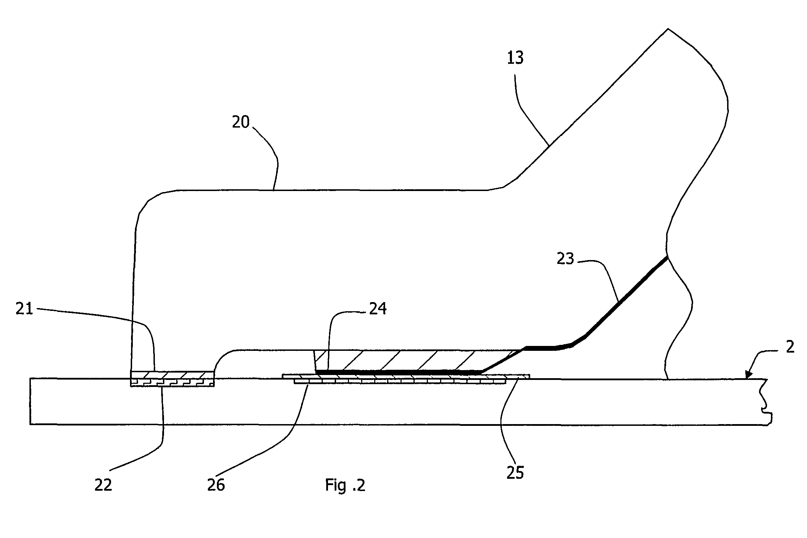

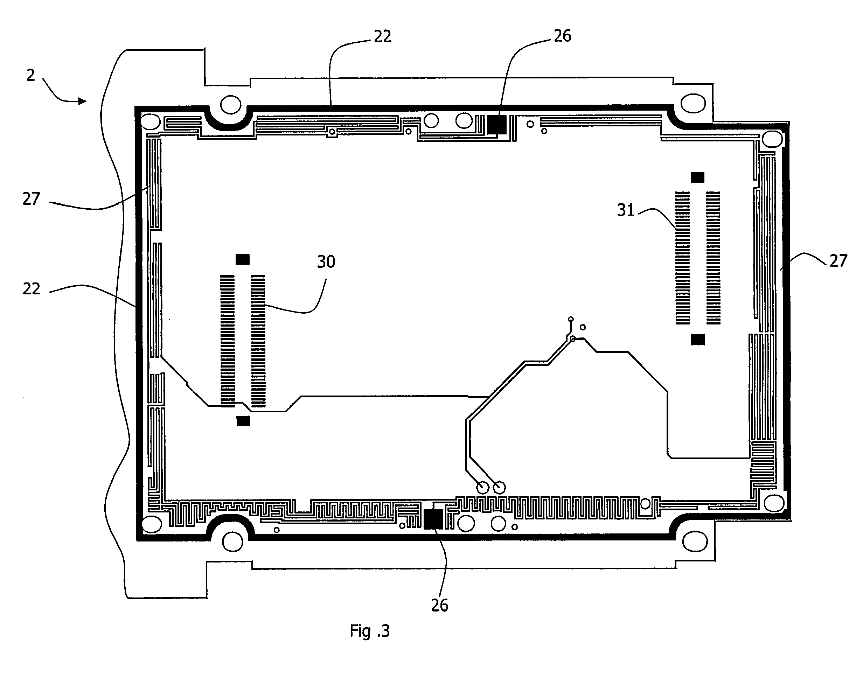

Referring to Fig. 2, each splayed side wall of the cover 11 terminates in a rim 20. A cover ground rail 21 extends around the periphery of the hidden surface of the rim 20, and it contacts a ground rail 22 of the board 2. The ground rails 21 and 22 are 1mm wide. The cover 11 has security tracks 23 in a serpentine pattern on its inside surface. These tracks have terminals 24 at two downwardly-projecting bosses on the rim 20. The corresponding locations on the board 2 have security track terminals 26. A security pad 25 lies between the two security track terminals 24 and 26 at these locations. The board security track terminals 26 are also shown in Fig. 3, as is a surface-level security track 27 extending around the periphery of the area covered by the cover 11, just inside the ground rail 22. This drawing also shows 80-way connectors 30 and 31 for supporting the secure circuit 10, which in this embodiment is an ARM CPU.

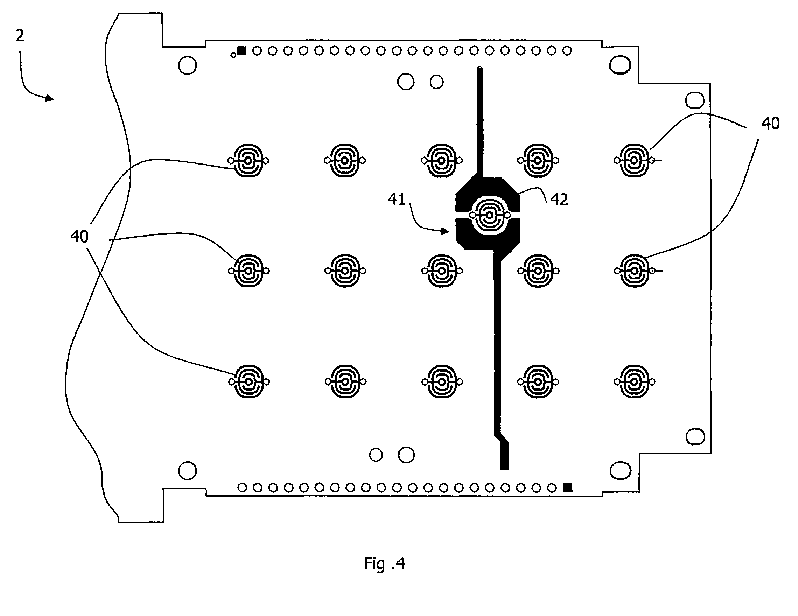

Fig. 4 shows the side of the board 2 opposed to the cover 11. This side includes conventional keys 40 and a case switch 41 key surrounded by protective copper 42 which is connected to ground potential.

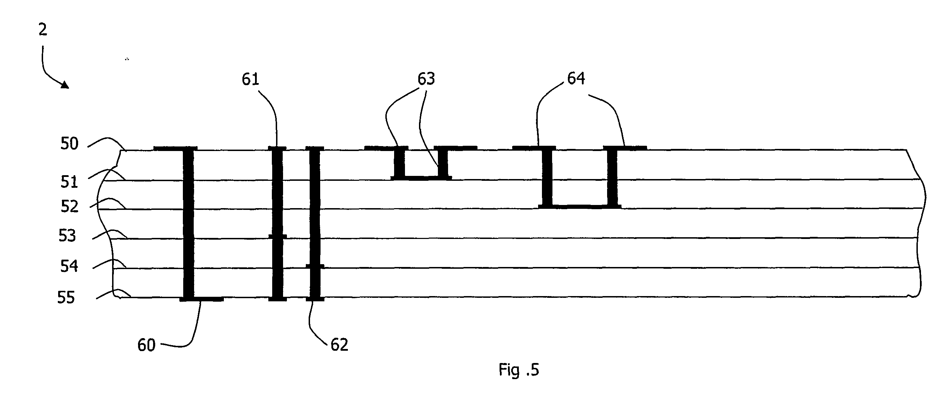

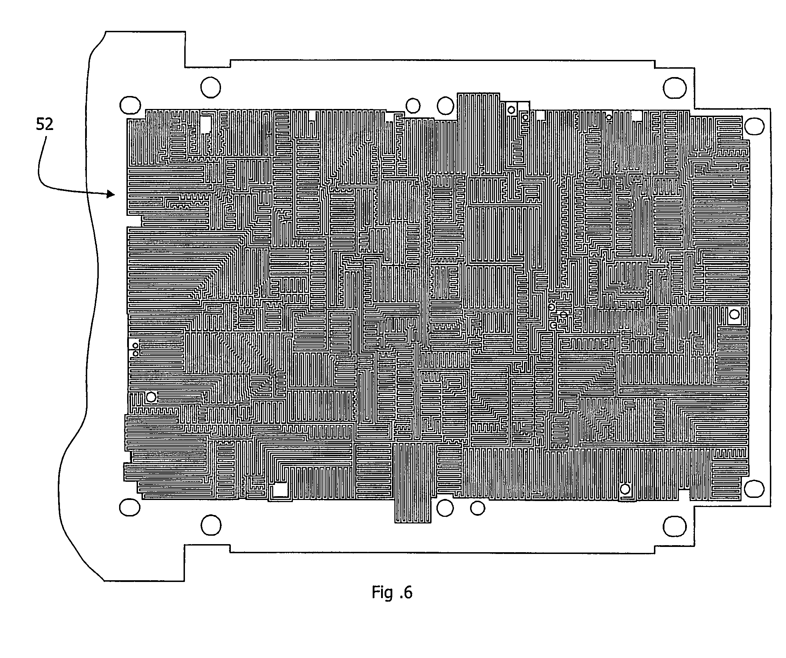

Referring to Fig. 5, the internal structure of the main board 2 is shown. There are six layers (two external and four internal), with five insulation layers in-between. The layers are as follows:
- 50:: On the internal surface. Conductors on the opposed external surface connect to this layer for ground, Vcc, keypad, LCD and non-secure signals. This layer connects to the secure circuit 10.
- 51:: Routing conductors for secure and non-secure signals. Microvias are used to minimise the number of through holes in the board 2.
- 52:: A security track layer with a serpentine pattern, shown in Fig. 6.
- 53:: A ground plane.
- 54:: Vcc, 3.3Vplane.
- 60:: Conductors on the external surface connected to keypad keys 40. This layer also contains some non-secure signals and the case switch key 41.

The board 2 also has both through hole and blind vias including, from left to right in Fig. 5:
(a) Through hole vias 60 for connecting keys and some non-secure signals to the secure circuit 10.
(b) Through hole vias 61 for connecting the layer 53 ground plane to both the top and bottom layers 50 and 55.
(c) Through hole vias 62 connecting the top and bottom layers 50 and 55 to the 3V3 conductor plane 54.
(d) Blind vias 63 for routing sensitive and non-sensitive conductors between the top layer 50 and the second layer 51.
(e) Blind vias connecting the secure circuit 10 to the security tracks of the layer 52.

Referring to Fig. 6 the internal security track 52 for conducting the mesh alarm signal and ground signal is illustrated. These signals are connected to the secure circuit 10 via the blind vias 64.

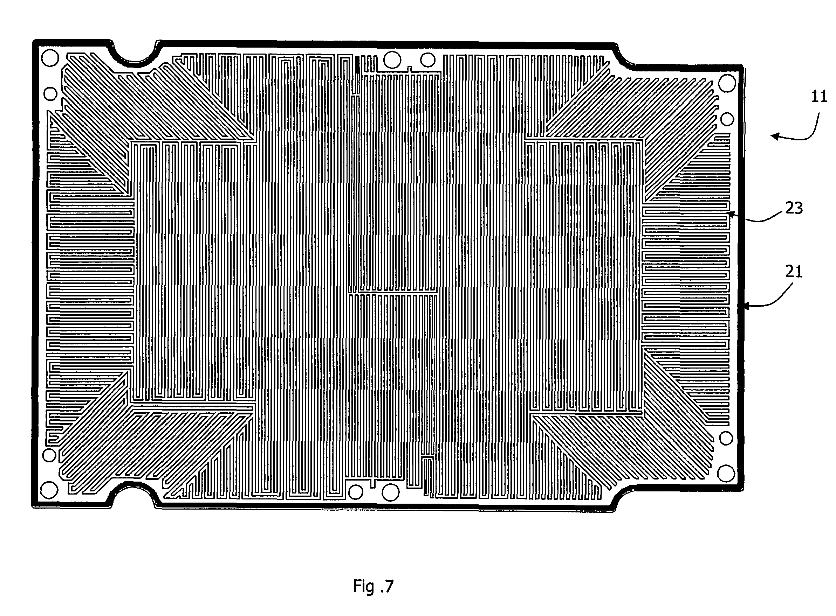

Referring to Fig. 7 the inside surface of the cover 11 has a security mesh track 23 on its surface. The track 23 includes terminals (shown by wide short lines at positions corresponding to those of the terminals 26 in Fig. 3). These are electrically connected to the two terminals 26 on the board 2, which in turn connect to the security tracks 27 and to the secure circuit 10 - thus forming a security cage around the secure circuit 10 and electrically connected to an alarm circuit on the secure circuit 10. The external ground (guard) rail 21 is also shown. This connects to the ground rail 22 of the main board 2. Both the ground rail 22 and the mesh 27 are on the top layer 50 of the main board 2.

The secure circuit 10 is an ARM CPU and alarm components, and it is protected by a combination of the cover 11 on whose surface there is the single mesh track 23 and the board 2 containing an internal single wire mesh track 52.

All of the numeric keys 40 on the keypad are contained within the area opposed to the cover 11, including the case switch 41 which will activate the alarm if the keypad is removed from its housing. This alarm would also be activated if the area around the key is flooded with conductive ink to try and short circuit the key due to the presence of a ground potential guard rail 42 around the key. The serpentine mesh 27 of the board 2 is connected such that if this mesh is broken, connected to ground, or drilled then the alarm will be raised on the ARM CPU 10.

All of the electronics requiring security protection are contained on the ARM CPU 10.

The cover 11 is made from a very precise engineering plastics material. The walls 13 are splayed at 45° and the rim 20 has two raised land areas which connect the terminals 24 to the two larger terminals 26 on the board 2. The terminals 26 are protected from attack by the internal serpentine alarm track 27. The terminal sizes, the gap between the cover 11 and the board 2 and the track widths and spacing meet ZKA and VISA PED security requirements. The separation between ground and the terminals is 0.5mm. If the ground area shorts to the mesh or either of the terminals then the alarm will be set.

The following summarises some of the main security features:
The internal serpentine mesh layer 52 connected to the alarm circuit. This internal mesh is larger than the secure area of the cover 11.
The case switch key 40 which will be a key contact on the back of the board 2. This key is constantly connected to a carbon PIL on the keypad membrane. If the keypad is removed from the outer plastic then the alarm will trigger.
The ground potential guard rail 42 is present around the case switch key 41.
If conductive ink is introduced to this pad area to try and bypass the key the ink will short the key to ground and raise the alarm condition.
All PED (PIN Entry Device) keys are contained in the secure area (that opposed to the cover 11).
The ground rail 22 on the top side of the board 2, which connects to the ground rail 21 of cover 11. If this ground rail is connected to the terminals or mesh then an alarm condition is raised.
The miniature serpentine mesh 27 in the areas under the land area of the cover 11. If this mesh is broken the alarm condition is raised.
The blind vias 63 which connect the layers 50 and 51 of the board 2. All secure signals on the board 2 will be routed on these layers. These signals are not visible on the key side of the board 2.
The blind 64 which connects the layer 50 to the layer 52. These vias transfer the alarm mesh signal from the ARM CPU 10 to the layer 52 of board 2.
These signals will not be visible on the key side of the board 2.
All through hole vias enter the secure area of the PCB in the area under the land area of the cover 11. This prevents probes from being inserted into the secure area.

The alarm track 23 on the cover 11 is connected in series to the following:
a) alarm track on the internal layer 52 of the board 2.
b) alarm track on 27 on the top layer of the board 2.
c) the case switch key 41 on the bottom layer 55 of the board 2.
The alarm signal is normally high. If it is broken (opened) or connected to ground then an alarm is raised on the ARM CPU 10, causing its RAM contents to be deleted.

Referring again to Fig. 2, each pad 25 is very small (only the dimensions of the terminals 26), however it forms an essential link between the security track 23 of the cover 11 and a terminal 26 of the security track 27 of the board 2. Each pad 25 comprises silicone rubber with dispersed brass fibres extending between the pad's faces. The surfaces of the pad 25 are gold plated. The arrangement of the brass fibres is such that electrical resistance between the two pad surfaces decreases with compression of the pad. Thus, as the screws are tightened to secure the cover 11 onto the board 2, the pads 25 are compressed, thus making them more conductive. This effectively links the cover's security mesh 23 to the board's security mesh 27 via the terminals 24 and 26. This arrangement provides many advantages. An attempt to tamper with the secure device 1 by separating the cover 11 from the board 2 results in an open circuit at the pad 25. However, an authorised engineer may non-destructively separate the cover 11 from the board 2 for repair or upgrade. The RAM contents are not lost, however the device may be repaired. Also, because the pad 25 is of resilient material it provides a degree of shock absorption, thus reducing risk of a fault if the device is dropped or knocked. Also, during manufacture, the pads 25 provide a large tolerance for tightening torque of the bolt fasteners.

If a hole is drilled through the cover 11 (or between the cover 11 and the board 2) an alarm will be raised on the ARM CPU 10 due to a track being broken. If a hole is drilled between the connection of the board 2 and the cover 11 the drill will cut security tracks on both the cover 11 and the board 2, thus raising an alarm condition.

Similarly if a hole is drilled through the board 2 the same alarm will be raised due to the single wire mesh track being broken or shorted to ground potential, causing the RAM contents on the secure circuit 10 to be deleted.

In an alternative embodiment, pads on the inner surface of the cover 11 are electrically connected to the board by a conductive polymer. The box is mechanically connected to the board by using a non-conductive epoxy and screws. In this embodiment, an attempt to forcibly separate the cover 11 from the board 2 would damage the security tracks.

The invention is not limited to the embodiments described but may be varied in construction and detail.

## Claims

1. A secure circuit device comprising a circuit board, a secure circuit on the circuit board, a cover (11) covering the secure circuit and being secured to the board, and security tracks on the cover (11) and on the board (2) arranged to be electrically connected together when the cover is in placed on the board, wherein a security track (23, 52, 27) is in a dense pattern covering a substantial part of the area of the cover or the board,**characterized in that**,
the cover and board security tracks (23, 27, 52) are connected via a seal disposed between the cover (11) and the board (2); and
said seal comprises a deformable conductive material pad, and conductivity of the pad increases with increased compression of the pad.

2. A device as claimed in claim 1, wherein the cover (11) comprises a security track (23) with a dense pattern on an inner surface, facing the board.

3. A device as claimed in claim 2, wherein said security track (23) has a serpentine pattern of a single continuous track.

4. A device as claimed in any preceding claim, wherein the board (2) has a multilayer structure and it comprises a security track (52) having a dense pattern in an internal layer.

5. A device as claimed in claim 4, wherein said pattern is a serpentine pattern of a continuous single track.

6. A device as claimed in claims 4 or 5, wherein the secure circuit (10) is electrically connected to said security track (52) by blind vias (64) in the board (2).

7. A device as claimed in any of claims 4 to 6, wherein the board (2) comprises through vias (60, 61) linking components (40) on an exposed board surface with the secure circuit (10).

8. A device as claimed in claim 7, wherein said components include a keypad (40).

9. A device as claimed in any of claims 4 to 8, wherein the board (4) comprises blind vias (63) linking parts of the secure circuit (10).

10. A device as claimed in any preceding claim, wherein both the cover (11) and the board (2) comprise inter-connecting ground rails (21, 22).

11. A device as claimed in any of claim 10, wherein said ground rails extend around a periphery of the board area covered by the cover.

12. A device as claimed in any preceding claim, wherein the pad comprises a deformable material with embedded conductors.

13. A device as claimed in claim 12, wherein the conductors comprise threads of metal extending between the surfaces of the pad.

14. A device as claimed in any of claims 8 to 13, wherein the keypad comprises a security key (40) linked with a security track.

15. A device as claimed in claim 14, wherein said security key comprises a ground guard rail surrounding the key.

16. A device as claimed in any preceding claim, wherein said security track comprises a track (27) in a serpentine pattern on a surface of the board (4) covered by, and facing towards, the cover (11).

17. A device as claimed in claim 16, wherein said track (27) connects with the security track (23) of the cover (11).

18. A device as claimed in claim 17, wherein said security track (27) is also connected to a security track (52) of an internal layer of the board.

## Patentansprüche

1. Sicheres Schaltungsbauelement, das Folgendes umfasst: eine Leiterplatte, eine sichere Schaltung auf der Leiterplatte, einen Deckel (11), der die sichere Schaltung bedeckt und an der Platte befestigt ist, und Sicherheitsleiterbahnen auf dem Deckel (11) und auf der Platte (2), die so angeordnet sind, dass sie elektrisch miteinander verbunden werden, wenn der Deckel auf die Platte gelegt wird, wobei eine Sicherheitsleiterbahn (23, 52, 27) in einem dichten Muster vorliegt, das einen erheblichen Teil der Fläche des Deckels oder der Platte bedeckt, **dadurch gekennzeichnet, dass**
die Sicherheitsleiterbahnen (23, 27, 52) von Deckel und Platte durch einen Verschluss miteinander verbunden werden, der zwischen dem Deckel (11) und der Platte (2) vorgesehen ist; und
der genannte Verschluss eine Kontaktstelle aus einem verformbaren leitenden Material umfasst und die Leitfähigkeit der Kontaktstelle mit zunehmender Kompression der Kontaktstelle zunimmt.

2. Bauelement nach Anspruch 1, wobei der Deckel (11) eine Sicherheitsleiterbahn (23) mit einem dichten Muster auf einer Innenseite hat, die der Platte zugewandt ist.

3. Bauelement nach Anspruch 2, wobei die genannte Sicherheitsleiterbahn (23) ein serpentinenförmiges Muster aus einer einzelnen fortlaufenden Leiterbahn hat.

4. Bauelement nach einem der vorherigen Ansprüche, wobei die Platte (2) eine Mehrlagenstruktur hat und eine Sicherheitsleiterbahn (52) mit einem dichten Muster in einer Innenlage umfasst.

5. Bauelement nach Anspruch 4, wobei das genannte Muster ein serpentinenförmiges Muster aus einer einzelnen fortlaufenden Leiterbahn ist.

6. Bauelement nach Anspruch 4 oder 5, wobei die sichere Schaltung (10) durch nicht durchgehende Kontakte (64) in der Platte (2) mit der genannten Sicherheitsleiterbahn (52) elektrisch verbunden ist.

7. Bauelement nach einem der Ansprüche 4 bis 6, wobei die Platte (2) Durchgangskontakte (60, 61) umfasst, die Komponenten (40) auf einer exponierten Plattenfläche mit der sicheren Schaltung (10) verbinden.

8. Bauelement nach Anspruch 7, wobei die genannten Komponenten ein Tastenfeld (40) beinhalten.

9. Bauelement nach einem der Ansprüche 4 bis 8, wobei die Platte (4) nicht durchgehende Kontakte (63) umfasst, die Teile der sicheren Schaltung (10) verbinden.

10. Bauelement nach einem der vorherigen Ansprüche, wobei sowohl der Deckel (11) als auch die Platte (2) Verbindungsmasseschienen (21, 22) umfassen.

11. Bauelement nach Anspruch 10, wobei die genannten Masseschienen um eine Peripherie der von dem Deckel bedeckten Plattenfläche herum verlaufen.

12. Bauelement nach einem der vorherigen Ansprüche, wobei die Kontaktstelle ein verformbares Material mit eingebetteten Leitern umfasst.

13. Bauelement nach Anspruch 12, wobei die Leiter Fäden aus Metall umfassen, die zwischen den Oberflächen der Kontaktstelle verlaufen.

14. Bauelement nach einem der Ansprüche 8 bis 13, wobei das Tastenfeld eine Sicherheitstaste (40) umfasst, die mit einer Sicherheitsleiterbahn verbunden ist.

15. Bauelement nach Anspruch 14, wobei die genannte Sicherheitstaste eine die Taste umgebende Masseschutzschiene umfasst.

16. Bauelement nach einem der vorherigen Ansprüche, wobei die genannte Sicherheitsleiterbahn eine Leiterbahn (27) in einem serpentinenförmigen Muster auf einer Oberfläche der Platte (4) umfasst, die von dem Deckel (11) bedeckt wird und diesem zugewandt ist.

17. Bauelement nach Anspruch 16, wobei die genannte Leiterbahn (27) mit der Sicherheitsleiterbahn (23) des Deckels (11) verbunden ist.

18. Bauelement nach Anspruch 17, wobei die genannte Sicherheitsleiterbahn (27) auch mit einer Sicherheitsleiterbahn (52) einer Innenlage der Platte verbunden ist.

## Revendications

1. Dispositif à circuit sécurisé comprenant une carte de circuit imprimé, un circuit sécurisé sur la carte de circuit imprimé, un couvercle (11) recouvrant le circuit sécurisé et fixé à la carte, et des pistes de sécurité sur le couvercle (11) et sur la carte (2) agencées pour être connectées ensemble électriquement quand le couvercle est placé sur la carte, dans lequel une piste de sécurité (23, 52, 27) présente un motif dense recouvrant une partie substantielle de la surface du couvercle ou de la carte, **caractérisé en ce que**,
les pistes de sécurité du couvercle et de la carte (23, 27, 52) sont connectées par l'intermédiaire d'un joint disposé entre le couvercle (11) et la carte (2) ; et
ledit joint comprend un tampon en matière conductrice déformable, et la conductivité du tampon augmente avec l'accroissement de la compression du tampon.

2. Dispositif selon la revendication 1, dans lequel le couvercle (11) comprend une piste de sécurité (23) présentant un motif dense sur une surface interne, faisant face à la carte.

3. Dispositif selon la revendication 2, dans lequel ladite piste de sécurité (23) présente un motif en serpentin d'une seule piste continue.

4. Dispositif selon l'une quelconque des revendications précédentes, dans lequel la carte (2) a une structure multicouche et comprend une piste de sécurité (52) présentant un motif dense dans une couche interne.

5. Dispositif selon la revendication 4, dans lequel ledit motif est un motif en serpentin d'une seule piste continue.

6. Dispositif selon la revendication 4 ou 5, dans lequel le circuit sécurisé (10) est connecté électriquement à ladite piste de sécurité (52) par des vias borgnes (64) dans la carte (2).

7. Dispositif selon l'une quelconque des revendications 4 à 6, dans lequel la carte (2) comprend des vias traversantes (60, 61) qui relient des composants (40) sur une surface de carte exposée au circuit sécurisé (10).

8. Dispositif selon la revendication 7, dans lequel lesdits composants comportent un pavé numérique (40).

9. Dispositif selon l'une quelconque des revendications 4 à 8, dans lequel la carte (4) comprend des vias borgnes (63) qui relient des parties du circuit sécurisé (10).

10. Dispositif selon l'une quelconque des revendications précédentes, dans lequel à la fois le couvercle (11) et la carte (2) comprennent des rails de masse d'interconnexion (21, 22).

11. Dispositif selon la revendication 10, dans lequel lesdits rails de masse s'étendent autour d'une périphérie de la surface de carte recouverte du couvercle.

12. Dispositif selon l'une quelconque des revendications précédentes, dans lequel le tampon comprend une matière déformable à conducteurs noyés.

13. Dispositif selon la revendication 12, dans lequel les conducteurs comprennent des fils de métal qui s'étendent entre les surfaces du tampon.

14. Dispositif selon l'une quelconque des revendications 8 à 13, dans lequel le pavé numérique comprend une clé de sécurité (40) reliée à une piste de sécurité.

15. Dispositif selon la revendication 14, dans lequel ladite clé de sécurité comprend un rail de garde de masse qui entoure la clé.

16. Dispositif selon l'une quelconque des revendications précédentes, dans lequel ladite piste de sécurité comprend une piste (27) présentant un motif en serpentin sur une surface de la carte (4) recouverte par le couvercle (11) et faisant face à celui-ci.

17. Dispositif selon la revendication 16, dans lequel ladite piste (27) se connecte à la piste de sécurité (23) du couvercle (11).

18. Dispositif selon la revendication 17, dans lequel ladite piste de sécurité (27) est également connectée à une piste de sécurité (52) d'une couche interne de la carte.
